# EUROPEAN PATENT APPLICATION

(11) **EP 3 159 623 A1**
(43) Date of publication of application: **26.04.2017**
(21) Application number: 16191746.3
(22) Date of filing: 30.09.2016
(51) Int. Cl.: F24H 9/12, F24H 9/20, F16K 15/14, F16K 15/18, F16K 17/19, F28F 27/02, F28G 9/00, F28D 20/00, F24H 9/00

(54) **WATER HEATER**

(30) Priority: 19.10.2015 CN 201510677471
(71) Applicant: BSH Hausgeräte GmbH, 81739 München (DE)
(72) Inventor: Schröder, Bernd, 73431 Aalen (DE); Tian, Yongchao, Nanjing, 210032 (CN); Yu, Xianglei, Nanjing (CN)

(57) **Abstract**

The present invention discloses a water heater, having a housing, an inner container disposed in the housing, an opening provided on the inner container, and a water inlet apparatus and further including: a valve body disposed on the opening, an enclosure connected to the inner container, a cavity structure disposed in the enclosure, and a water inlet pipe disposed on the enclosure and connected to the cavity structure, where the inner container is in communication with the cavity structure by using the valve body. By means of the present invention, a prior-art problem that because a water buffer apparatus of a water heater is mounted in an inner container, cleaning or replacement is inconvenient is resolved. By means of the present invention, a user can clean or replace the water buffer apparatus outside the water heater, which has an easy and simple operation and avoids damage to the water heater caused by detachment.

## Description

### BACKGROUND

### Technical Field

The present invention relates to the technical field of water heating devices, and specifically, to a water heater.

### Related Art

A water inlet is provided at the bottom of an inner container of an existing water heater, and is connected to a water inlet pipe. Cold water enters the inner container through the water inlet pipe and the water inlet, where a part of the cold water surges into hot water at an upper layer of the inner container, which results in a decrease in a temperature of the hot water, and causes a reduction in an amount of output hot water, thereby reducing a hot water output rate of the water heater.

At present, in the prior art, a buffer apparatus such as a baffle is disposed at the water inlet of the inner container to reduce a stream velocity of the cold water, which avoids the cold water from directly surging into the hot water at the upper layer of the inner container, and therefore improves the amount of the output hot water. However, the foregoing buffer apparatus such as a baffle needs to be mounted in the inner container by means of welding or in another manner, which has a requirement on the technique. Moreover, if the buffer apparatus needs to be cleaned or replaced, the inner container needs to be removed, which is very inconvenient.

For a prior-art problem that because a water buffer apparatus of a water heater is mounted in an inner container, cleaning or replacement is inconvenient, no effective solution has been proposed yet at present.

### SUMMARY

The present invention provides a water heater, to resolve at least a prior-art problem that because a water buffer apparatus of a water heater is mounted in an inner container, cleaning or replacement is inconvenient.

To achieve the objective, according to an aspect of the present invention, a water heater is provided.

The water heater according to the present invention has a housing, an inner container disposed in the housing, an opening provided on the inner container, and a water inlet apparatus and further includes: a valve body disposed on the opening, an enclosure connected to the inner container, a cavity structure disposed in the enclosure, and a water inlet pipe disposed on the enclosure and connected to the cavity structure, where the inner container is in communication with the cavity structure by using the valve body. By using the foregoing structure, the water inlet apparatus is disposed outside the inner container, and the cavity structure is disposed in the enclosure, to decrease a stream velocity of cold water entering the enclosure from the water inlet pipe, thereby achieving a buffer effect. Moreover, the valve body is disposed on the opening, to control the cold water to enter and stop entering the inner container.

Preferably, the valve body is movably disposed on the opening. The valve body may move by using a movable component such as a hinge or an elastic piece, so as to control the cold water to enter and stop entering the inner container.

Preferably, the valve body can move between a first position and a second position, where at the first position, the valve body and the opening of the inner container form a channel through which water flows to pass, and at the second position, the valve body closes the channel. Specifically, for example, the foregoing elastic piece is used to control the valve body to rotate. At the first position, the valve body opens the channel by means of rotation; and at the second position, the valve body closes the channel by means of rotation.

Preferably, movement of the valve body relative to the opening is controlled by water pressure. The movement of the valve is controlled by using a difference of water pressure inside or outside the inner container. When water pressure in the inner container is lower than water pressure outside the inner container, the valve body rotates to the first position under the water pressure outside the inner container (that is, water pressure in the enclosure). In this case, the channel is opened, and cold water enters the inner container from the channel. When the water pressure in the inner container is higher than the water pressure outside the inner container, the valve body is forced by the water pressure in the inner container to rotate to the second position. In this case, the channel is closed, and cold water stops entering the inner container.

Preferably, the valve body has a cover that is located in the inner container and covers the opening of the inner container, and the channel is located below the cover. By using the foregoing cover as a switch of the channel, when the channel is closed, the cover completely covers the opening of the inner container, and cold water cannot enter the inner container. When the channel is opened, the cover is detached from the opening of the inner container, and in this case, cold water can enter the inner container through the channel.

Preferably, the valve body has a support that is perpendicular to the cover and is located between the cover and the opening, and a retaining edge located outside the inner container, where a height of the support enables the cover to perpendicularly move with respect to the opening, so as to close the opening or communicate the inner container with the cavity structure. The valve body may be designed into a component wide at the top and bottom and narrow in the middle. The valve body is provided on the opening by using the retaining edge and the cover that can cover the opening, so that the valve body is controlled to move between the first position and the second position, thereby controlling opening and closing of the opening.

Preferably, a hole is provided on the support of the valve body. The hole is provided on the support, and the support and the hole form the foregoing channel. When the valve body is at the first position, the hole is in the middle of the inner container, and cold water flows into the inner container through the hole. When the valve body is at the second position, the hole is sealed, and cold water cannot flow out.

Preferably, the water heater is provided with a pressure relief apparatus connected to the water inlet pipe; and the cover includes a groove having a notch, and the groove is recessed outward from the inner container, where water in the inner container flows into the enclosure through the notch, and is discharged out of the pressure relief apparatus through the water inlet pipe. When the water pressure in the inner container reaches a set value, the channel is closed by using the foregoing valve body, and if the water pressure continues to increase, the water is discharged by using the valve body through the notch on the cover. The cover is designed into the groove having the notch, so that when the pressure is excessively high, the pressure can be relieved through the notch by using structure and parameter settings. Therefore, the valve body of the present invention can control entering of cold water as well as pressure relief.

Preferably, the valve body is made of soft silicone or plastic.

Preferably, the valve body is detachably disposed on the opening. Because the valve body may be made of a soft material, detachment is convenient, and cleaning and replacement are easy.

Preferably, the foregoing water heater further includes a sealing apparatus sleeved on the opening, where the valve body is disposed on the sealing apparatus. To ensure sealability of a structure of the inner container at the opening, the sealing apparatus may be disposed between the valve body and the opening.

Preferably, the valve body is sealably connected to the sealing apparatus.

Preferably, the sealing apparatus is detachably mounted on the opening.

Preferably, the sealing apparatus and the enclosure are connected to the inner container by using a bolt.

Preferably, the sealing apparatus further includes: a block wall disposed in the cavity structure, and the block wall attaches to an inner wall of the enclosure. Such design can enhance sealability of the enclosure.

Preferably, in the water inlet apparatus in the foregoing solution, a cross sectional area of the cavity structure is greater than a cross sectional area of the water inlet pipe. Such design enables cold water entering the enclosure to be directly buffered in the cavity position.

Preferably, in the foregoing solution, the water inlet pipe and the opening of the inner container are disposed in a staggered manner. Staggering design can improve a buffer effect of the foregoing cavity structure.

By means of the present invention, a prior-art problem that because a water buffer apparatus of a water heater is mounted in an inner container, cleaning or replacement is inconvenient is resolved, so that a user can clean or replace the water buffer apparatus outside the water heater, which has an easy and simple operation. Therefore, a health hazard is eliminated in time and safety of water is ensured for the user. Moreover, damage to the water heater caused by detachment is avoided.

### BRIEF DESCRIPTION OF THE DRAWINGS

The accompanying drawings described here provide further understanding of the present invention and constitute a part of the present application. Exemplary embodiments of the present invention and description thereof are intended to illustrate the present invention, without constituting an improper limit to the present invention. In the accompanying drawings:
- FIG. 1: is a schematic diagram of a water heater;
- FIG. 2: is a schematic diagram of a water inlet apparatus in a first embodiment;
- FIG. 3: is a schematic diagram of a cover in the first embodiment;
- FIG. 4: is a schematic diagram of pressure relief of a water heater in the first embodiment;
- FIG. 5: is a schematic diagram of a cover in a second embodiment;
- FIG. 6: is a schematic cross-sectional diagram of the cover in the second embodiment;
- FIG. 7: is a schematic diagram of a water inlet apparatus in a second embodiment; and
- FIG. 8: is a schematic diagram of pressure relief of a water heater in the second embodiment.

### DETAILED DESCRIPTION

The present invention is described in detail with reference to accompanying drawings and in combination with embodiments in the following. It should be noted that embodiments in this application and features in the embodiments can be combined without any conflict.

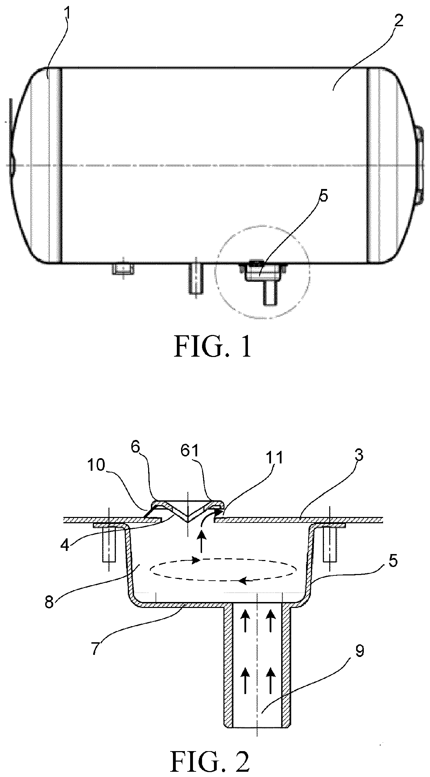

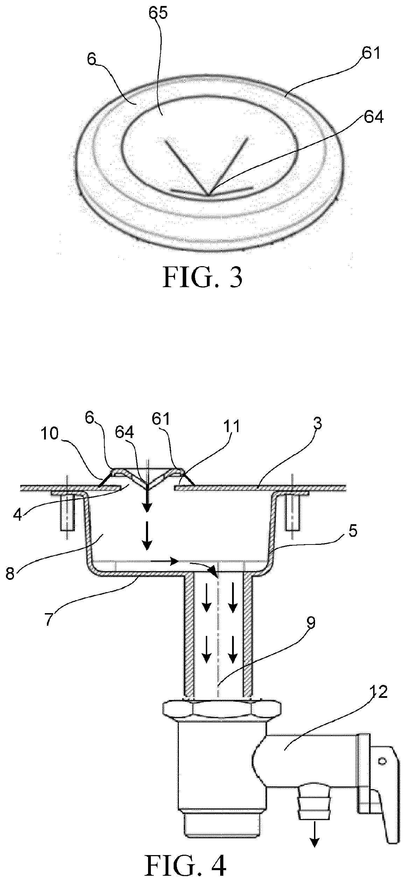

In a first embodiment, FIG. 1 is a schematic diagram of a water heater. FIG. 2 is a schematic diagram of a water inlet apparatus in the first embodiment. FIG. 3 is a schematic diagram of a cover in the first embodiment. FIG. 4 is a schematic diagram of pressure relief of a water heater in the first embodiment. As shown in FIG. 1, FIG. 2, FIG. 3, and FIG. 4:
the water heater 1 has a housing 2, an inner container 3 disposed in the housing, an opening 4 provided on the inner container, and a water inlet apparatus 5. The water inlet apparatus 5 includes:
   a valve body 6 disposed on the opening 4,
   an enclosure 7 connected to the inner container 3,
   a cavity structure 8 disposed in the enclosure 7, and
   a water inlet pipe 9 disposed on the enclosure 7 and connected to the cavity structure 8, where
   the inner container 3 is in communication with the cavity structure 8 by using the valve body 6.

Preferably, the foregoing valve body 6 is made of soft silicone or plastic, and the valve body 6 is detachably disposed on the opening 4. Because the valve body may be made of a soft material, detachment is convenient, and cleaning and replacement are easy.

Preferably, as shown in FIG. 2, a cross sectional area of the foregoing cavity structure 8 is greater than a cross sectional area of the water inlet pipe 9. Such design enables cold water entering the enclosure to be directly buffered at a position of the cavity structure 8. The water inlet pipe 9 and the opening 4 of the inner container may be disposed in a staggered manner. Staggering design can improve a buffer effect of the foregoing cavity structure.

By using the foregoing structure, the water inlet apparatus 5 is disposed outside the inner container 3, and the cavity structure 8 is disposed in the enclosure 7, to decrease a stream velocity of cold water entering the enclosure 7 from the water inlet pipe 9, thereby achieving a buffer effect. Moreover, the valve body 6 is disposed on the opening 4, to control the cold water to enter and stop entering the inner container.

Preferably, the valve body 6 is movably disposed on the opening 4. As shown in FIG. 2, the valve body 6 may move by using a movable component such as a hinge or an elastic piece 10, so as to control the cold water to enter and stop entering the inner container.

Preferably, the valve body 6 can move between a first position and a second position, where at the first position, the valve body 6 and the opening 4 of the inner container 4 form a channel 11 through which water flows to pass, and at the second position, the valve body 6 closes the channel 11. Specifically, for example, the foregoing elastic piece 10 is used to control the valve body 6 to rotate. At the first position, the valve body 6 opens the channel 11 by means of rotation; and at the second position, the valve body 6 closes the channel 11 by means of rotation.

Preferably, movement of the valve body 6 relative to the opening 4 is controlled by water pressure. The movement of the valve body 6 is controlled by using a difference of water pressure inside or outside the inner container. When water pressure in the inner container 3 is lower than water pressure outside the inner container, the valve body 6 is pushed by the water pressure outside the inner container (that is, water pressure in the enclosure 7) to rotate to the first position. In this case, the channel 11 is opened, and cold water enters the inner container from the channel. When the water pressure in the inner container 3 is higher than the water pressure outside the inner container, the valve body 6 is forced by the water pressure in the inner container to rotate to the second position. In this case, the channel 11 is closed, and cold water stops entering the inner container.

Preferably, as shown in FIG. 2 and FIG. 3, the foregoing valve body has a cover 61 that is located in the inner container and covers the opening 4 of the inner container, and the channel 11 is located below the cover 61. By using the foregoing cover 61 as a switch of the channel, when the channel is closed, the cover 61 completely covers the opening 4 of the inner container, and cold water cannot enter the inner container 3. When the channel is opened, the cover is detached from the opening 4 of the inner container, and in this case, cold water can enter the inner container 3 through the channel 11.

Preferably, as shown in FIG. 3 and FIG. 4, the water heater 1 is provided with a pressure relief apparatus 12 connected to an end of the water inlet pipe 9. The cover 61 includes a groove 65 having a notch 64, and the groove 65 is recessed outward from the inner container. Water in the inner container flows into the enclosure 7 through the notch 64, and is discharged out of the pressure relief apparatus 12 through the water inlet pipe 9.

As described above, when the water pressure in the inner container 3 is higher than the water pressure outside the inner container, the valve body 6 is forced by the water pressure in the inner container to rotate to the second position. In this case, the channel 11 is closed, and cold water stops entering the inner container. In this case, if the water pressure in the inner container 3 continues to increase, the pressure needs to be relieved. The water is discharged by using the valve body 6 through the notch 64 on the cover 61. The cover 61 is designed into the groove 65 having the notch 64, so that when the pressure in the inner container 3 is excessively high, a pressure relief function can be relieved through the notch by using structure and parameter settings. Therefore, the valve body of the present invention can control entering of cold water as well as pressure relief for water in the inner container.

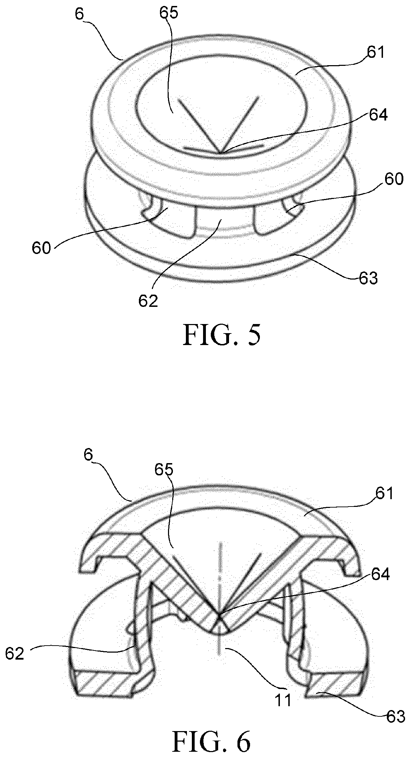

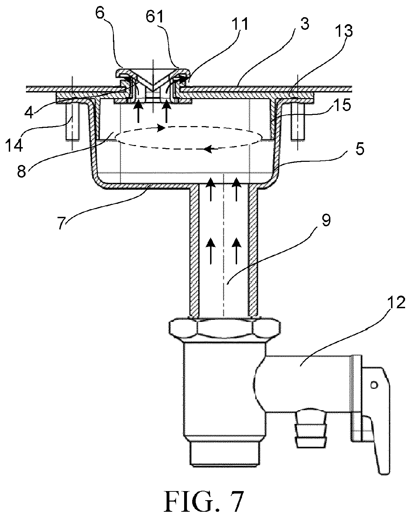

In a second embodiment, FIG. 5 is a schematic diagram of a cover in the second embodiment. FIG. 6 is a schematic cross-sectional diagram of the cover in the second embodiment. FIG. 7 is a schematic diagram of a water inlet apparatus in a second embodiment. As shown in FIG. 5, FIG. 6, and FIG. 7:
a valve body has a support 62 that is perpendicular to the cover 61 and is located between the cover 61 and an opening 4, and a retaining edge 63 located outside an inner container. A height of the support 62 enables the cover 61 to perpendicularly move with respect to the opening 4, so as to close the opening 4 or communicate the inner container with a cavity structure 8.

The valve body 6 is designed into an I-shaped component wide at the top and bottom and narrow in the middle. The valve body 61 is stuck on the opening by using the retaining edge 63 and the cover 61 that can cover the opening, so that the valve body 6 is conveniently controlled to move between a first position and a second position, thereby controlling opening and closing of the opening 4.

Preferably, as shown in FIG. 5, a hole 60 is provided on the support 62 of the foregoing valve body 6. The hole 60 is provided on the support 62, and the support 62 and the hole 60 form the foregoing channel 11.

As shown in FIG. 7, when water pressure in the inner container 3 is lower than water pressure outside the inner container 3, the valve body 6 is pushed by the water pressure outside the inner container 3 (that is, water pressure in the enclosure 7) to rise to the first position, and the hole 60 provided on the support 62 is located in the middle of the inner container 3. In this case, the channel 11 is opened, and cold water flows into the inner container 3 through the hole 60. When the water pressure in the inner container 3 is higher than the water pressure outside the inner container, the valve body 6 is forced by the water pressure in the inner container to drop to the second position and the hole 60 provided on the support 62 is sealed. In this case, the channel 11 is closed, and cold water cannot enter the inner container 3.

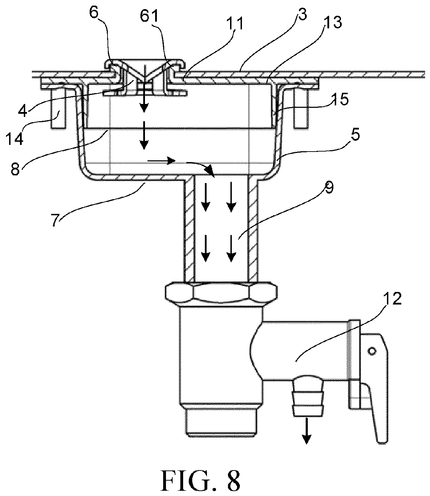

Preferably, the water inlet apparatus in this embodiment may also be connected to a pressure relief apparatus. FIG. 8 is a schematic diagram of pressure relief of a water heater in the second embodiment. As shown in FIG. 8:
the water heater 1 is provided with a pressure relief apparatus 12 connected to a water inlet pipe 9; and the cover 61 includes a groove 65 having a notch 64, and the groove 65 is recessed outward from the inner container. Water in the inner container flows into the enclosure 7 through the notch 64, and is discharged out of the pressure relief apparatus 12 through the water inlet pipe 9.

As described above, when the water pressure in the inner container 3 is higher than the water pressure outside the inner container 3, the valve body 6 is forced by the water pressure in the inner container 3 to drop to the second position and the hole 60 provided on the support 62 is sealed. In this case, the channel 11 is closed, and cold water cannot enter the inner container 3. In this case, if the water pressure in the inner container 3 continues to increase, the pressure needs to be relieved. The water is discharged by using the valve body 6 through the notch 64 on the cover 61. The cover 61 is designed into the groove 65 having the notch 64, so that when the pressure in the inner container 3 is excessively high, a pressure relief function can be relieved through the notch by using structure and parameter settings. Therefore, the valve body 6 in this solution can also control entering of cold water as well as pressure relief.

In combination with some or all technical features in the foregoing solution, as shown in FIG. 7 and FIG. 8:
the water heater 1 further includes a sealing apparatus 13 sleeved on the opening 4. The valve body 6 is disposed on the sealing apparatus 13, and the valve body 6 is sealably connected to the sealing apparatus 13.

To ensure sealability of a structure of the inner container at the opening 4 the sealing apparatus 13 may be disposed between the valve body 6 and the opening, and the sealing apparatus 13 is detachably mounted on the opening 4. For example, the sealing apparatus 13 and the enclosure 7 are connected to the inner container 3 by using a bolt 14. Installation and detachment are convenient, and cleaning or replacement is easy.

Preferably, the sealing apparatus 13 further includes: a block wall 15 disposed in the cavity structure 8, and the block wall 15 attaches to an inner wall of the enclosure 7. In this way, sealability of the enclosure 7 is further ensured.

By means of the present invention, a prior-art problem that because a water buffer apparatus of a water heater is mounted in an inner container, cleaning or replacement is inconvenient is resolved, so that a user can clean or replace the water buffer apparatus outside the water heater, which has an easy and simple operation. Therefore, a health hazard is eliminated in time and safety of water is ensured for the user. Moreover, damage to the water heater caused by detachment is avoided.

Various specific embodiments described in the foregoing and shown in accompanying drawings are only used for illustrating the present invention, and are not regarded as the entirety of the present invention. Within the scope of the basic technical thought of the present invention, any types of modifications for the present invention made by persons ordinarily skilled in the art fall within the scope of the present invention.

## Claims

1. A water heater, having a housing, an inner container disposed in the housing, an opening provided on the inner container, and a water inlet apparatus, **characterized in that** the water inlet apparatus comprises:
a valve body disposed on the opening, an enclosure connected to the inner container, a cavity structure disposed in the enclosure, and
a water inlet pipe disposed on the enclosure and connected to the cavity structure, wherein the inner container is in communication with the cavity structure by using the valve body.

2. The water heater according to claim 1, **characterized in that**: the valve body is movably disposed on the opening.

3. The water heater according to claim 2, **characterized in that**: the valve body can move between a first position and a second position, wherein at the first position, the valve body and the opening of the inner container form a channel through which water flows to pass, and at the second position, the valve body closes the channel.

4. The water heater according to claim 3, **characterized in that**: movement of the valve body relative to the opening is controlled by water pressure.

5. The water heater according to claim 4, **characterized in that**: the valve body has a cover that is located in the inner container and covers the opening of the inner container, and the channel is located below the cover.

6. The water heater according to claim 5, **characterized in that**: the valve body has a support that is perpendicular to the cover and is located between the cover and the opening, and a retaining edge located outside the inner container, wherein
a height of the support enables the cover to perpendicularly move with respect to the opening, so as to close the opening or communicate the inner container with the cavity structure.

7. The water heater according to claim 6, **characterized in that**:
a hole is provided on the support of the valve body.

8. The water heater according to claim 5 or 7, **characterized in that**: the water heater is provided with a pressure relief apparatus connected to the water inlet pipe; and the cover comprises a groove having a notch, and the groove is recessed outward from the inner container, wherein water in the inner container flows into the enclosure through the notch, and is discharged out of the pressure relief apparatus through the water inlet pipe.

9. The water heater according to claim 1, **characterized in that**: the valve body is made of soft silicone or plastic.

10. The water heater according to claim 1, **characterized in that**: the valve body is detachably disposed on the opening.

11. The water heater according to claim 1, **characterized by** comprising: a sealing apparatus sleeved on the opening, wherein the valve body is disposed on the sealing apparatus.

12. The water heater according to claim 11, **characterized in that**: the valve body is sealably connected to the sealing apparatus.

13. The water heater according to claim 11, **characterized in that**: the sealing apparatus is detachably mounted on the opening.

14. The water heater according to claim 11, **characterized in that**: the sealing apparatus and the enclosure are connected to the inner container by using a bolt.

15. The water heater according to claim 14, **characterized in that** the sealing apparatus comprises: a block wall disposed in the cavity structure, wherein the block wall attaches to an inner wall of the enclosure.

16. The water heater according to claim 1, **characterized in that**: a cross sectional area of the cavity structure is greater than a cross sectional area of the water inlet pipe.

17. The water heater according to claim 16, **characterized in that**: the water inlet pipe and the opening of the inner container are disposed in a staggered manner.
